# EUROPEAN PATENT APPLICATION

(11) **EP 2 042 533 A2**
(43) Date of publication of application: **01.04.2009**
(21) Application number: 08165140.8
(22) Date of filing: 25.09.2008
(51) Int. Cl.: C08G 18/08, C08G 18/42, C08G 18/62, C09D 175/04, C09D 175/06

(54) **Method for restoring or executing an anti-fingerprint coating onto sheets of stainless steel**

(30) Priority: 27.09.2007 IT RM20070503
(71) Applicant: ThyssenKrupp Acciai Speciali Terni S.p.A., 05100 Terni (IT)
(72) Inventor: Colaiacovo, Ferdinando, 00129, Rome (IT); Tortora, Stefano, 00129, Rome (IT); Tortoreto, Luca, 00129, Rome (IT); Mauro, Stefano, 05100, Terni (IT); Salamone, Gianvincenzo, 05100, Terni (IT)
(74) Representative: Di Cerbo, Mario

(57) **Abstract**

The present invention refers to a method for restoring or executing an anti-fingerprint coating onto plates of stainless steel obtainable by pre-varnishing in form of sheets or strips.
Subject of the invention are also the varnish suitable for the restoration or the execution of the above coating, as well as the coated sheets and manufactured articles.

## Description

The present invention refers to the field of restoration and execution of anti-fingerprint coatings onto manufactured articles produced with plates of stainless steel obtainable by pre-varnishing in form of sheets or strips (coil/sheet coating).

The protection of stainless steel from fingerprints is typically executed with the use of organic transparent coatings, like varnishes or adhesive films.

E.g., AU 2005201315 A1 describes an anti-fingerprint coating executed with thermosetting resins, optionally provided with an intermediate layer to foster varnish/substrate adhesion.

As it is known, in the course of steps connected to the process of handling, construction or use of manufactured articles (e.g., molding, welding, grinding steps), it may happen that the coating of the pre-varnished sheets of steel used be damaged on limited zones.

Zones that underwent coating injury or removal represent a remarkable aesthetic defect of the final manufactured article, and moreover entail the altering of performance features of the pre-coated sheets of steel, e.g. by unevenness in resistance to chemical or corrosive agents.

Therefore, in the specific field there is the need of a simple method, capable of forming a restored coating with aesthetic qualities nearly identical to those of the original coating.

The problem is complicated even further in that, onto sheets pre-coated with traditional (thermal cross-linking) anti-fingerprint varnishes, mechanical restoration steps (weld grinding and restoration of the mechanical finish of the steel surface), generate abraded zones markedly lighter in colour with respect to the remainder of the pre-coated surface (that has yellowed in the course of the thermal cross-linking) with an entailed aesthetic decay of the manufactured article.

This problem is solved by the method according to the present invention, allowing the restoration of the anti-fingerprint coating onto sheets pre-coated with technologies causing no thermal alteration of stainless steel bases, such as coatings cross-linked by UV or EB radiation (e.g., Silver Ice® UV) or according to the precoating method likewise described hereinafter.

In fact, subject of the present invention is a method for obtaining an anti-fingerprint coating onto sheets of stainless steel, which:
- in case of restoration of the coating onto plates coated with transparent coatings, optionally in the form of manufactured articles, comprises the following steps:
   - applying, onto the sheet zone with removed or injured coating, a chemically cross-linking varnish containing: a resin with active -OH groups and a polyisocyanic resin, both in solvent solution;
   - varnish cross-linking, carried out at room temperature, with times comprised between 12 and 24 hours, or optionally with heating for times comprised between 1 and 10 minutes and for temperatures comprised between 50 and 100°C; and
- in case of execution of the coating onto plates, optionally in form of sheets or strips, comprises the following steps:
   - applying a chemically cross-linking varnish containing: a resin with active -OH groups and a polyisocyanic resin, both in solvent solution;
   - varnish cross-linking, executed with heating for times comprised between 10 and 30 seconds and for Peak Metal Temperatures (PMTs) of the sheet comprised between 150 and 200°C, such as not to cause aesthetic alterations of the stainless steel.

The applying of the varnishing product, in order to restore the coating, may be carried out with a technique selected from the group comprising spray, brush, pad and air pen techniques.

The applying of the varnishing product, in order to execute the coating, may be carried out with varnishing roller heads.

Subject of the present invention is also a chemically cross-linking varnish, comprising a resin containing active OH groups and a polyisocyanic resin dispersed in solvent solution, wherein:
- the resin containing active OH groups is preferably selected from the group comprising hydroxylated acrylic resins, saturated hydroxylated polyester resins, epoxy resins containing hydroxyl groups and combinations thereof,
- the polyisocyanic resin is preferably comprised of HDI-type aliphatic polyisocyanates,
- the solvents are preferably selected from the group comprising esters, ketons and hydrocarbons.

The varnish, in an embodiment, contains 2.5 to 6 parts by weight of solution of at least one resin, selected from the group comprising the hydroxylated acrylic resins and the saturated hydroxylated polyester resins, 0.5 to 2 parts by weight of solution of aliphatic polyisocyanic resin, and 13 to 16 parts by weight of solvent.

In a variant of the invention, the solvent of the hydroxylated acrylic resin may be a mixture of butyl acetate, xylene and naphtha.

The mixture of butyl acetate, xylene and naphtha may be in a 4:1:1 ratio.

The solvent of the aliphatic polyisocyanic resin may be a mixture of butyl acetate, xylene and 2-methoxy-1-methylethyl acetate.

The mixture of butyl acetate, xylene and 2-methoxy-1-methylethyl acetate may be in a 1:1:0.5 ratio.

The present invention refers also to the use of the varnish for the restoration of the anti-fingerprint coating onto manufactured articles produced with sheet of stainless steel coated with transparent coatings, and to the use of the varnish for the execution of an anti-fingerprint coating onto sheets of stainless steel.

Moreover, subject of the invention is also a sheet of stainless steel, of a thickness comprised between 0.2 and 1.2 mm, with anti-fingerprint coating consisting of the product resulting from the cross-linking of at least one resin selected from the group comprising the hydroxylated acrylic resins and the saturated hydroxylated polyester resins, with an aliphatic polyisocyanic resin.

Lastly, the present invention refers to a manufactured article, formed or assembled with sheets of stainless steel having a thickness comprised between 0.2 and 1.2 mm, with a coating of chemically cross-linking varnish with a thickness of 0.5 to 10.0 µm, obtainable with the method of the invention.

The present invention attains the following advantages:
- the proposed varnishing product can be applied (by spray, brush, pad, roller) with thicknesses analogous to the thickness of the original coating, and it is capable of chemically setting and cross-linking;
- the obtainable repair coating possesses a good adhesion both on naked steel and on pre-existing anti-fingerprint coatings.
- the obtainable repair coating, after complete setting, is visually undistinguishable from the original coating, enables complete restoration of the aesthetics of the original coating, and is resistant to surface cleaning products, food, steam and heat;
- the anti-fingerprint coating obtainable onto sheets of stainless steel does not produce, in the varnish cross-linking step, appreciable thermal alterations of the steel surface;
   A general description of the present invention has been given hereto. With the aid of the following examples, hereinafter a more detailed description of its embodiments will be provided, aimed at making better understood the objects, features, advantages and operation steps thereof.

### EXAMPLE 1

A manufactured article was produced by head-assembling, with plasma welding, two sheets of AISI 304 stainless steel having a thickness of 0.3 mm, satin, with a 2-µm Silver Ice® UV-type anti-fingerprint coating applied via coil-coating.

The 40-mm surface belt, satin after elimination of the welding cord, is coated by air pen (0.3mm nozzle, 2 bar, 80-120 mm distance) with a varnish according to the invention containing 4 parts by weight of the following component A, 1 part by weight of the following component B and 16 parts by weight of the following solvent.

### Component A

Hydroxylated acrylic resin in a 60% solution in solvent mixture (butyl acetate/xylene/naphtha solvent in a 4:1:1 ratio).

### Component B

Aliphatic polyisocyanic resin diluted to 60% in solvent mixture (butyl acetate/xylene/2-methoxy-1-methylethyl acetate in a 1:1:0.5 ratio).

### Solvent

Solvent mixture (butyl acetate/xylene/2-methoxy-1-methylethyl acetate in a 1:1:1 ratio).

The coating applied onto the 40-mm surface belt, satin after elimination of the welding cord, was brought out of touch by blowing in hot air onto the pieces (PMT 60-80°C) for about 90 s.

Tests for assessing the aesthetic-functional features of the coating were carried out at +48 h from the applying of the repair coating.

Results of characterization tests carried out onto the above-mentioned manufactured article show that the repair varnish exhibits:
- excellent adherence, both onto naked steel and in zones overlapping with the Silver Ice® UV coating;
- aesthetic properties are such as to make non-visible the repaired section;
- functional properties are adequate for all typical uses of manufactured articles produced for the field of electrical household appliances and architectural paneling.

### EXAMPLE 2

This example refers to a formulation and an application test carried out onto sheets of stainless steel (AISI 304) having a 0.5mm thickness with Scotch Brite finish.

Preparation of transparent varnishing product
Component A - Hydroxylated polyester resin with a content of hydroxyl groups equal to 2.5% by weight, 65% solution dissolved in solvent mixture (naphtha solvent and butyl acetate in a 90:10 ratio).
Component B - 75% aliphatic polyisocyanic resin (biureto-HDI type) in methoxypropylacetate, having a content of NCO groups equal to about 16.5% by weight.
Component C - Polysiloxane resin-based slipping/levelling additive.
Component D - Solvent: consisting of a mixture of butyl acetate/xylene/2-methoxy-1 methylethyl acetate in a 1:1:1 ratio
A:B:C:D constituent mixing ratio (100:24:0.1:200).

The varnish thus prepared has a pot life of at least 10 h.

### Applying mode

The coating was applied onto the sheets by threaded bar, at a dry thickness of 2-3 µm. Post-applying, the organic film was subjected to a quick hardening cycle by heating in a ventilated stove, until reaching a metal temperature (PMT) of 180°C over a total time of 22 s.

After such a pre-cross-linking cycle, the coating proved perfectly dry and stackable under pressure, without intersurface sticking. The chemico-physical features of the coating were assessed after 48 h of stationing at room temperature, in order to ensure a complete cross-linking state (see Table 1).

### EXAMPLE 3

This example refers to a second formulation and a coating test, carried out on an industrial coil-coating line, of sheets of AISI 430 stainless steel with satin finish, 0.5 x 1300 mm, in form of reels or coils.

### Transparent varnish product

Component A1 - Hydroxilated acrylic resin in a 60% solution in solvent mixture (Butyl acetate/Xylene/Naphtha solvent in a 4:1:1 ratio)

Component A2 - Saturated polyester resin in a 75% solution in naphtha solvent, having an hydroxyl value equal to 25 mg KOH /g

Component B - Aliphatic polyisocyanic resin (HDI) 60% diluted in solvent mixture (butyl acetate/xylene/2-methoxy-1 methylethyl acetate in a 1:1: 0.5 ratio)

Component C - Solvent: Propilene glycol methyl ether acetate

Mixing ration of constituents A:B:C:D (100:10:28:250).
Applying modes
Line rate 25 m/min
3-roller varnishing machine (direct-applying mode).
Drying/pre-cross-linking in IR furnace at a PMT of 190°C, total time 15 s.

The chemico-physical features of the coating were assessed at + 48 h of stationing at room temperature, to enable the coating to achieve a completely cross-linked state (see Table 1).

As shown in Table 1, results of characterization tests of the coated sheets highlight a colour variation, with respect to naked bases, extremely low and not visually perceivable, and excellent endowments of adherence, ductility, chemical and corrosion resistance.

**Table 1**

| Features of anti-fingerprint coatings related to Examples 2 and 3 | | | |
|---|---|---|---|
| ***Feature*** | ***Method*** | ***Example 2*** | ***Example 3*** |
| Substrate | | 304 SB | 430 Satin |
| Coating thickness | ECCA T1 | *2-3µm* | *0,5 µm* |
| Colour difference (after heating cycle) | ASTM D 1729 | *ΔE<0.5* | *ΔE<0,5* |
| Dry adhesion | ASTM D 3359 | 100/100 | 100/100 |
| Degree of cross-linking (MEK resistance) | ECCA T11 | 70-80 d.c | >100 d.c |
| Bending ductility | ECCA T7 | 1.5/2 T | 1.5/2T |
| Erichsen drawing | | 6 mm, no peeling | 6 mm, no peeling |
| Resistance to rubbing with cleaning products -denatured alcohol -liquid CIF | ECCA T11 | Positive | Positive |
| Resistance to steam | 30° - 80°C x 5 cycles | Positive | Positive |
| Resistance to boiling water | Dipping, 1h | Positive Small opacizations | Positive |
| Resistance to stain formation by contact with food -Oil -Tomato juice -coffee | ECCA T18 Spot stain 24h RT | Positive | Positive |
| Resistance to impact | ECCA T5 | > 10 Nm | > 10Nm |
| Resistance to salt water spray | ASTM B 117 | 168 h, ok | 168 h, ok |

## Claims

1. A method for obtaining an anti-fingerprint coating onto sheets of stainless steel, **characterised in that**:
• in case of restoration of the coating onto plates coated with transparent coatings, optionally in form of manufactured articles, comprises the following steps:
- applying, onto the sheet zone with removed or injured coating, a chemically cross-linking varnish containing: a resin with active -OH groups and a polyisocyanic resin, both in solvent solution;
- varnish cross-linking, carried out at room temperature, with times comprised between 12 and 24 hours, or optionally with heating for times comprised between 1 and 10 minutes and for temperatures comprised between 50 and 100°C; and
• in case of execution of the coating onto plates, optionally in form of sheets or strips, comprises the following steps:
- applying a chemically cross-linking varnish containing: a resin with active -OH groups and a polyisocyanic resin, both in solvent solution;
- varnish cross-linking, executed with heating for times comprised between 10 and 30 seconds and for Peak Metal Temperatures (PMTs) of the sheet comprised between 150 and 200°C.

2. The method according to claim 1, wherein the applying of the varnishing product, in order to restore the coating, is carried out with a technique selected from the group comprising spray, brush, pad and air pen techniques.

3. The method according to claim 1, wherein the applying of the varnishing product, in order to execute the coating, is carried out with varnishing roller heads.

4. A chemically cross-linking varnish, **characterised in that** it comprises a resin containing active -OH groups and a polyisocyanic resin dispersed in solvent solution, wherein:
- the resin containing active -OH groups is preferably selected from the group comprising: hydroxylated acrylic resins, saturated hydroxylated polyester resins, epoxy resins containing hydroxyl groups and combinations thereof;
- the polyisocyanic resin is preferably comprised of HDI-type aliphatic polyisocyanates,
- the solvents are preferably selected from the group comprising esters, ketons and hydrocarbons.

5. The varnish according to claim 4, wherein the varnishing product contains 2.5 to 6 parts by weight of solution of at least one resin selected from the group comprising the hydroxylated acrylic resins or the saturated hydroxylated polyester resins or the epoxy resins, and 0.5 to 2 parts by weight of solution of aliphatic polyisocyanic resin and 13 to 16 parts by weight of solvent.

6. The varnish according to claim 5, wherein the solvent of the hydroxylated acrylic resin is a mixture of butyl acetate, xylene and naphtha.

7. The varnish according to claim 6, wherein butyl acetate, xylene and naphtha are in a 4:1:1 ratio.

8. The varnish according to any one of claims 4 and 5, wherein the solvent of the aliphatic polyisocyanic resin is a mixture of butyl acetate, xylene and 2-methoxy-1-methylethyl acetate.

9. The varnish according to claim 8, wherein butyl acetate, xylene and 2-methoxy-1-methylethyl acetate are in a 1:1:0.5 ratio.

10. A use of the varnish according to claims 4 to 9 for the restoration of the anti-fingerprint coating onto manufactured articles produced with sheet of stainless steel coated with colourless transparent coatings.

11. The use of the varnish according to claims 4 to 9 for the execution of anti-fingerprint coatings onto sheets of stainless steel without altering its colour.

12. A sheet of stainless steel with anti-fingerprint coating, **characterised in that** it comprises a coating, with a thickness comprised in the range 0.5-10 µm, consisting of the product resulting from the cross-linking of at least one resin selected from the group comprising the hydroxylated acrylic resins and the saturated hydroxylated polyester resins, with an aliphatic polyisocyanic resin, and **in that** the sheet of stainless steel has a thickness comprised between 0.2 and 1.2 mm.

13. A manufactured article, formed or assembled with sheets of stainless steel, **characterised in that** the sheets of stainless steel have a thickness comprised between 0.2 and 1.2 mm, with a coating of chemically cross-linking varnish, according to claims 4 to 9, with a thickness of 0.5 to 10.0 µm, obtainable with the method of claim 1.
